(19) **Europäisches Patentamt / European Patent Office / Office européen des brevets**

(11) **EP 4 778 976 A1**

(12) **EUROPEAN PATENT APPLICATION**
published in accordance with Art. 153(4) EPC

(43) Date of publication:
**22.07.2026 Bulletin 2026/30**

(21) Application number: **24865703.3**

(22) Date of filing: **16.08.2024**

(51) International Patent Classification (IPC):
$C08L\ 33/20^{(2006.01)}$    $C08L\ 51/04^{(2006.01)}$
$C08L\ 51/00^{(2006.01)}$    $C08K\ 5/09^{(2006.01)}$
$C08K\ 5/20^{(2006.01)}$    $B29C\ 45/00^{(2006.01)}$

(52) Cooperative Patent Classification (CPC):
**B29C 45/00; C08K 5/09; C08K 5/20; C08L 33/20; C08L 51/00; C08L 51/04**

(86) International application number:
**PCT/KR2024/012166**

(87) International publication number:
**WO 2025/058262 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.09.2023 KR 20230122497**
            **13.08.2024 KR 20240108280**

(71) Applicant: **LG CHEM, LTD.**
**Seoul 07336 (KR)**

(72) Inventors:
- **SHIN, Dong Kun**
 **Daejeon 34122 (KR)**
- **YOO, Je Sun**
 **Daejeon 34122 (KR)**
- **JANG, Seokgoo**
 **Daejeon 34122 (KR)**
- **SHIM, Hyungseop**
 **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **ASA-BASED RESIN COMPOSITION, PREPARATION METHOD THEREFOR, AND MOLDED PRODUCT COMPRISING SAME**

(57) The present invention relates to an ASA-based resin composition, a method of preparing the same, and a molded article including the same. According to the present invention, the present invention has an effect of providing an ASA-based resin composition capable of replacing conventional transparent materials, maintaining transparency, improving release properties during injection, and thus preventing injection cracking even when injecting small medical transparent products or transparent food containers.

[FIG. 1]

EXTRACTION STEP
EJECTION FORCE MEASUREMENT

EP 4 778 976 A1

**Description**

[Technical Field]

[Cross-Reference to Related Applications]

This application claims priority to Korean Patent Application No. 10-2023-0122497, filed on September 14, 2023, and Korean Patent Application No. 10-2024-0108280, re-filed on August 13, 2024, based on the priority of the above patent, in the Korean Intellectual Property Office, the disclosures of each of which are incorporated herein by reference.

The present invention relates to an ASA-based resin composition, a method of preparing the same, and a molded article including the same, and more particularly, to an ASA-based resin composition suitable for a small transparent material capable of providing excellent physical property balance between injection molding release properties and transparency, a method of preparing the same, and a molded article including the same.

[Background Art]

Due to environmental issues, an acrylate-styrene-acrylonitrile graft copolymer (hereinafter referred to as 'ASA resin') is attracting attention as a transparent material that can replace existing transparent materials such as PVC resin and PC resin used in medical containers, food containers, etc. The ASA resin has excellent weather resistance, aging resistance, chemical resistance, and processability, and is widely used in various fields such as automobiles, home appliances, leisure goods, construction materials, gardening goods, and building materials.

However, the ASA resin has poor release properties when injection molding small transparent products, and cracks frequently occur during the injection process.

Accordingly, research was attempted to improve the release properties by adding additives to ASA resin, but in this case, transparency decreased rapidly, making it difficult to replace existing transparent materials.

Accordingly, there is a need to develop an ASA-based resin composition capable of providing excellent physical property balance between injection molding release properties and transparency while imparting injection molding release properties to ASA resin.

[Related Art Documents]

[Patent Documents]

KR 2011-0082121 A

[Disclosure]

[Technical Problem]

Therefore, the present invention has been made in view of the above problems, and it is one object of the present invention to provide an ASA-based resin composition having injection molding release properties suitable for small transparent materials and excellent physical property balance between the injection molding release properties and transparency and a method of preparing the ASA-based resin composition.

It is another object of the present invention to provide a molded article manufactured using the ASA-based resin composition.

The above and other objects can be accomplished by the present invention described below.

[Technical Solution]

I) In accordance with one aspect of the present invention, provided is an ASA-based resin composition including a base resin including an acrylic graft copolymer (A) and a methacrylate-based copolymer (B), a saturated carboxylic acid compound (C), and an unsaturated carboxamide compound (D), wherein, based on 100 parts by weight of the base resin, the saturated carboxylic acid compound (C) and the unsaturated carboxamide compound (D) are included in a total amount of 0.51 to 1.44 parts by weight.

II) According to I), the saturated carboxylic acid compound may be a compound including one or more -COOH groups at a terminal thereof, having a C5 to C30 alkyl group, and having a refractive index (80 °C) of 1.35 to 1.45.

III) According to I) or II), the unsaturated carboxamide compound may be a compound including one or more -CON groups at a terminal thereof, having a C5 to C50 alkyl group, and having a refractive index (80 °C) of 1.5 to 1.6.

IV) According to I) to III), the -CON group may be - $CONH_2$, - $CONHR_1$, or - $CONR_1R_2$, and $R_1$ and $R_2$ may be an alkyl group having 1 to 5 carbon atoms.

V) According to I) to IV), the saturated carboxylic acid compound and the unsaturated carboxamide compound may be included in a weight ratio of 1:0.5 to 1:1.5 (saturated carboxylic acid compound: unsaturated carboxamide compound).

VI) According to I) to V), based on 100 parts by weight of the base resin, a total amount of the saturated carboxylic acid compound and the unsaturated carboxamide compound may be 1.5 parts by weight or less. Here, the base resin may include an acrylic graft copolymer and a methacrylate-based copolymer.

VII) According to I) to VI), the base resin may include the acrylic graft copolymer (A) and the methacrylate-based copolymer (B) in a weight ratio of 1:0.5 to 1:1.5 (A:B).

VIII) According to I) to VII), the acrylic graft copolymer (A) may be included in an amount of 40 % by weight or more.

IX) According to I) to VIII), the acrylic graft copolymer (A) may include a small particle-diameter acrylic graft copolymer (A1) and a large particle-diameter acrylic graft copolymer (A2).

X) According to I) to IX), the acrylic graft copolymer (A) may include a small particle-diameter acrylic graft copolymer (A1) and a large particle-diameter acrylic graft copolymer (A2) in a weight ratio of 1:3.5 to 1:10 (A1:A2).

XI) According to I) to X), the small particle-diameter acrylic graft copolymer (A1) may include 35 to 45 % by weight of a rubber polymer having an average particle diameter of 50 to 100 nm, 40 to 50 % by weight of an aromatic vinyl compound, and 5 to 10 % by weight of a vinyl cyanide compound, and/or may have a weight average molecular weight of 50,000 to 150,000 g/mol.

XII) According to I) to XI), the large particle-diameter acrylic graft copolymer (A2) may include 35 to 45 % by weight of a rubber polymer having an average particle diameter of 150 to 300 nm, 40 to 50 % by weight of an aromatic vinyl compound, and 5 to 10 % by weight of a vinyl cyanide compound, and/or may have a weight average molecular weight of 50,000 to 150,000 g/mol.

XIII) According to I) to XII), based on 100 parts by weight of the base resin, the saturated carboxylic acid compound may be included in an amount of 0.1 to 1.0 part by weight.

XIV) According to I) to XIII), based on 100 parts by weight of the base resin, the unsaturated carboxamide compound may be included in an amount of 0.1 to 1.0 part by weight.

XV) According to I) to XIV), when continuous injection of 200 shots is performed on a removable mold core under injection molding conditions of a temperature of 250 to 280 °C and a pressure of 25 to 35 bar using an injection molding machine (clamping force: 220 tons, LS Co.), a weight of gas deposited on the mold core is measured, and then mold deposit is calculated by Equation 1 below, the ASA-based resin composition may have a mold deposit of 40 mg or less.

Mold deposit (mg) = Weight of mold core after 200 shots - Weight of initial mold core        [Euqation 1]

XVI) According to I) to XV), the ASA-based resin composition may have a force value of 1600 N or less as measured by installing a device for measuring injection molding release properties (ejection force) in an extraction step of a cup mold injection molding machine.

XVII) According to I) to XVI), the ASA-based resin composition may have a haze of less than 3.0 % as measured according to ASTM D1003.

XVIII) In accordance with another aspect of the present invention, provided is a method of preparing an ASA-based resin composition, the method including kneading and extruding a base resin including an acrylic graft copolymer (A) and a methacrylate-based copolymer (B), a saturated carboxylic acid compound (C), and an unsaturated carboxamide compound (D) at 200 to 300 °C and 100 to 500 rpm, wherein, based on 100 parts by weight of the base resin, the saturated carboxylic acid compound (C) and the unsaturated carboxamide compound (D) are included in a total amount of 0.51 to 1.44 parts by weight.

XIX) In accordance with yet another aspect of the present invention, provided is a molded article including the above-described ASA-based resin composition.

XX) According to XIX), the molded article may include small transparent products such as small medical transparent products and small transparent food containers

XXI) According to XIX) or XX), the small medical transparent products may include syringes and tube connectors.

[Advantageous Effects]

An ASA-based resin composition according to the present invention can provide excellent physical property balance between injection molding release properties suitable for small transparent materials and transparency.

That is, both of the injection molding release properties and transparency of a molded article manufactured using the ASA-based resin composition according to the present invention can be improved, and mold deposits can be reduced.

Accordingly, the ASA-based resin composition according to the present invention can be widely applied to molded articles such as small medical transparent products including syringes and tube connectors, and transparent food containers.

[Description of Drawings]

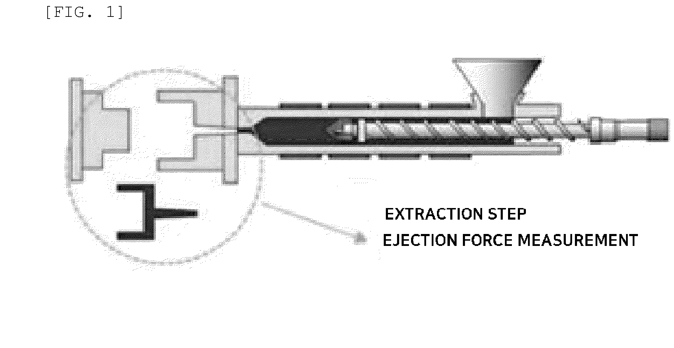

FIG. 1 is a cross-sectional view of a cup mold injection molding machine used to measure injection molding release properties (ejection force) according to the present invention.

[Best Mode]

Hereinafter, the present invention will be described in more detail to help understand the present invention.

The terms and words which are used in the present specification and the appended claims should not be construed as being confined to common meanings or dictionary meanings but should be construed as having meanings and concepts matching the technical spirit of the present invention in order to describe the present invention in the best fashion.

The present inventors confirmed that, by including a predetermined injection lubricity improver, injection molding release properties suitable for small transparent materials and physical property balance between the injection molding release properties and transparency were implemented. Based on these findings, the present inventors conducted further study to complete the present invention.

The ASA-based resin composition according to the present invention includes an injection lubricity improver.

In the present disclosure, unless otherwise specified, the term "injection lubricity improver" refers to a compound that may improve the release properties of an ASA-based resin composition by preventing the occurrence of cracks during injection without adversely affecting the composition of the ASA-based resin composition.

Hereinafter, each component of the ASA-based resin composition of the present invention will be described in detail.

Base resin

The base resin constituting the ASA-based resin composition may be composed of an acrylic graft copolymer (A) and a methacrylate-based copolymer (B).

For example, the base resin may include the acrylic graft copolymer (A) and the methacrylate-based copolymer (B) in a weight ratio of 1:0.5 to 1:1.5 (A:B), 1:0.7 to 1:1.5 (A:B), or 1:0.7 to 1:1.3 (A:B). In this case, even when including an injection lubricity improver, injection molding release properties and excellent physical property balance between injection molding release properties and transparency may be provided.

Hereinafter, each component of the base resin constituting the ASA-based resin composition of the present invention is described in detail.

(A) Acrylic graft copolymer

The acrylic graft copolymer (A) may include a small particle-diameter acrylic graft copolymer (A1) and a large particle-diameter acrylic graft copolymer (A2). In this case, compared to using a small particle-diameter acrylic graft copolymer alone, impact strength may be improved. In addition, compared to a large particle-diameter acrylic graft copolymer alone, alcohol-related whitening may be improved.

(A1) Small particle-diameter acrylic graft copolymer

The small particle-diameter acrylic graft copolymer (A1) may contain acrylate rubber having an average particle diameter of 50 to 100 nm, preferably 60 to 95 nm, more preferably 75 to 90 nm. Within this range, mechanical strength such as impact strength may be excellent.

In the present disclosure, the average particle diameter is measured by dynamic light scattering. Specifically, the average particle diameter is measured as an intensity value using a Nicomp 380 particle size analyzer (manufacturer:

PSS) in a Gaussian mode. As a specific measurement example, a sample is prepared by diluting 0.1 g of latex (total solids content: 35 to 50 wt%) 1,000 to 5,000-fold with distilled water. Then, the average particle diameter of the sample is measured using a flow cell in auto-dilution in a measurement mode of dynamic light scattering/intensity 300 kHz/intensity-weight Gaussian analysis. At this time, setting values are as follows: temperature: 23 °C, measurement wavelength: 632.8 nm, and channel width: 10 μsec.

For example, based on 100 % by weight in total of all components constituting the base resin, the small particle-diameter acrylic graft copolymer (A1) may be included in an amount of 1 to 10 % by weight, 3 to 10 % by weight, 3 to 9 % by weight, or 4 to 9 % by weight. Within this range, transparency equal or superior to that of conventional ASA resin compositions may be achieved, and appearance quality may be excellent.

For example, based on 100 % by weight in total thereof, the small particle-diameter acrylic graft copolymer (A1) may include 35 to 45 % by weight of an acrylate rubber polymer having an average particle diameter of 50 to 100 nm, 40 to 50 % by weight of an aromatic vinyl compound, and 5 to 10 % by weight of a vinyl cyanide compound, preferably 35 to 45 % by weight or 12 to 18 % by weight of an acrylate rubber polymer having an average particle diameter of 60 to 95 nm, 40 to 50 % by weight or 58 to 63 % by weight of an aromatic vinyl compound, and 5 to 10 % by weight or 5 to 9 % by weight of a vinyl cyanide compound. Within this range, mechanical strength such as impact strength may be excellent.

In the present disclosure, a polymer including a certain compound means a polymer prepared by polymerizing the compound, and a unit in the polymer is derived from the compound.

The acrylate rubber may include an alkyl acrylate compound.

In the present disclosure, for example, the alkyl acrylate compound may include an alkyl acrylate containing an alkyl group having 1 to 15 carbon atoms, preferably one or more selected from the group consisting of methyl acrylate, ethyl acrylate, propyl acrylate, butyl acrylate, 2-ethylbutyl acrylate, octyl acrylate, 2-ethylhexyl acrylate, hexyl acrylate, heptyl acrylate, n-pentyl acrylate, and lauryl acrylate, more preferably an alkyl acrylate containing a chain alkyl group having 1 to 4 carbon atoms, still more preferably butyl acrylate.

In the present disclosure, for example, the aromatic vinyl compound may include one or more selected from the group consisting of styrene, α-methyl styrene, o-methyl styrene, ρ-methyl styrene, m-methyl styrene, ethyl styrene, isobutyl styrene, t-butyl styrene, o-bromo styrene, ρ-bromo styrene, m-bromo styrene, o-chloro styrene, ρ-chloro styrene, m-chloro styrene, vinyltoluene, vinylxylene, fluorostyrene, and vinylnaphthalene, preferably one or more selected from the group consisting of styrene and α-methyl styrene, still more preferably styrene. In this case, due to the appropriate fluidity, processability and mechanical properties such as impact resistance may be excellent.

In the present disclosure, for example, the vinyl cyanide compound may include one or more selected from the group consisting of acrylonitrile, methacrylonitrile, ethylacrylonitrile, and isopropylacrylonitrile, preferably acrylonitrile.

For example, the small particle-diameter acrylic graft copolymer (A1) may have a weight average molecular weight of preferably 50,000 to 150,000 g/mol, more preferably 50,000 to 130,000 g/mol, still more preferably 70,000 to 130,000 g/mol. Within this range, impact strength and hardness may be excellent.

When measuring weight average molecular weight, a sample having a concentration of 1 wt% is prepared by putting tetrahydrofuran (THF) and a compound in a 1 ml glass bottle. Then, after filtering a standard sample (polystyrene) and the sample through a filter (pore size: 0.45 μm), the filtered samples are injected into a GPC injector. Then, the molecular weight and molecular weight distribution of the compound may be obtained by comparing the elution time of the sample with the calibration curve of the standard sample. At this time, Infinity II 1260 (Agilient Co.) may be used as measuring instrument, and flow rate may be set to 1.00 mL/min and column temperature may be set to 40.0 °C.

For example, the small particle-diameter acrylic graft copolymer (A1) may be prepared by emulsion polymerization. In this case, mechanical strength such as impact strength may be excellent.

The emulsion polymerization may be performed using an emulsion graft polymerization method commonly practiced in the art to which the present invention pertains, without particular limitation.

(A2) Large particle-diameter acrylic graft copolymer

The large particle-diameter acrylic graft copolymer (A2) may contain acrylate rubber having an average particle diameter of 150 to 300 nm, preferably 180 to 300 nm, more preferably 180 to 250 nm. Within this range, mechanical strength such as impact strength may be excellent.

For example, based on 100 % by weight in total of all components constituting the base resin, the large particle-diameter acrylic graft copolymer (A2) may be included in an amount of 30 to 50 % by weight, 32 to 48 % by weight, or 35 to 45 % by weight. Within this range, transparency equal or superior to that of conventional ASA resin compositions may be achieved, and appearance quality may be excellent.

For example, based on 100 % by weight in total thereof, the large particle-diameter acrylic graft copolymer (A2) may include 35 to 45 % by weight of an acrylate rubber polymer having an average particle diameter of 150 to 300 nm, 40 to 50 % by weight of an aromatic vinyl compound, and 5 to 10 % by weight of a vinyl cyanide compound, preferably 35 to 45 % by weight or 12 to 18 % by weight of an acrylate rubber polymer having an average particle diameter of 180 to 300 nm, 40 to 50 % by weight or 58 to 63 % by weight of an aromatic vinyl compound, and 5 to 10 % by weight or 5 to 9 % by weight of a vinyl cyanide compound. Within this range, mechanical strength such as impact strength may be excellent.

In the present disclosure, a polymer including a certain compound means a polymer prepared by polymerizing the compound, and a unit in the polymer is derived from the compound.

The acrylate rubber may include an alkyl acrylate compound.

In the present disclosure, for example, the alkyl acrylate compound may include an alkyl acrylate containing an alkyl group having 1 to 15 carbon atoms, preferably one or more selected from the group consisting of methyl acrylate, ethyl acrylate, propyl acrylate, butyl acrylate, 2-ethylbutyl acrylate, octyl acrylate, 2-ethylhexyl acrylate, hexyl acrylate, heptyl acrylate, n-pentyl acrylate, and lauryl acrylate, more preferably an alkyl acrylate containing a chain alkyl group having 1 to 4 carbon atoms, still more preferably butyl acrylate.

The types of the aromatic vinyl compound and the vinyl cyanide compound are as described in the description of the small particle-diameter acrylic graft copolymer (A1).

For example, the large particle-diameter acrylic graft copolymer (A2) may have a weight average molecular weight of preferably 50,000 to 150,000 g/mol, more preferably 50,000 to 130,000 g/mol, still more preferably 70,000 to 130,000 g/mol. Within this range, impact strength and hardness may be excellent.

For example, the large particle-diameter acrylic graft copolymer (A2) may be prepared by emulsion polymerization. In this case, mechanical strength such as impact strength may be excellent.

The emulsion polymerization may be performed using an emulsion graft polymerization method commonly practiced in the art to which the present invention pertains, without particular limitation.

Based on 100 % by weight in total of all components constituting the base resin, a total amount of the small particle-diameter acrylic graft copolymer (A1) and the large particle-diameter acrylic graft copolymer (A2) may be 40 % by weight or more, preferably 40 to 65 % by weight, more preferably 45 to 55 % by weight. Within this range, when an injection lubricity improver is included in the ASA-based resin composition, injection molding release properties and physical property balance between injection molding release properties, transparency, and mold deposit may be excellent.

(B) Methacrylate-based copolymer

For example, the methacrylate-based copolymer (B) may be a methacrylic acid alkyl ester compound-aromatic vinyl compound-vinyl cyanide compound copolymer.

For example, the methacrylic acid alkyl ester compound-aromatic vinyl compound-vinyl cyanide compound copolymer may have a weight average molecular weight of preferably 150,000 to 300,000 g/mol, more preferably 180,000 to 280,000 g/mol, still more preferably 180,000 to 250,000 g/mol. Within this range, impact strength and hardness may be excellent.

For example, based on 100 % by weight in total of all components constituting the base resin, the methacrylic acid alkyl ester compound-aromatic vinyl compound-vinyl cyanide compound copolymer (B) may be included in an amount of 30 to 60 % by weight, 35 to 60 % by weight, 40 to 60 % by weight, or 45 to 57 % by weight. Within this range, fluidity and appearance quality may be improved while maintaining impact resistance, heat resistance, and hardness.

For example, the methacrylic acid alkyl ester compound-aromatic vinyl compound-vinyl cyanide compound copolymer (B) may include a methacrylic acid alkyl ester compound, an aromatic vinyl compound, and a vinyl cyanide compound. In this case, impact resistance may be excellent, and deterioration of heat resistance properties may be suppressed.

As a preferred example, based on 100 % by weight in total thereof, the methacrylic acid alkyl ester compound-aromatic vinyl compound-vinyl cyanide compound copolymer may include 55 to 80 % by weight of a methacrylic acid alkyl ester compound, 25 to 45 % by weight of an aromatic vinyl compound, and 5 to 15 % by weight of a vinyl cyanide compound, more preferably 60 to 75 % by weight of a methacrylic acid alkyl ester compound, 20 to 40 % by weight of an aromatic vinyl compound, and 5 to 10 % by weight of a vinyl cyanide compound, still more preferably 65 to 75 % by weight of a methacrylic acid alkyl ester compound, 20 to 35 % by weight of an aromatic vinyl compound, and 5 to 10 % by weight of a vinyl cyanide compound 5 to 10 % by weight. In this case, due to excellent fluidity, appearance quality may be excellent.

The methacrylic acid alkyl ester compound (B) may be selected from methyl methacrylate, ethyl methacrylate, propyl methacrylate, butyl methacrylate, pentyl methacrylate, hexyl methacrylate, heptyl methacrylate, octyl methacrylate, 2-ethylhexyl methacrylate, nonyl methacrylate, isononyl methacrylate, and decyl methacrylate, preferably methyl methacrylate.

The types of the aromatic vinyl compound and the vinyl cyanide compound are as described in the description of the small particle-diameter acrylic graft copolymer (A1).

For example, the methacrylic acid alkyl ester compound-aromatic vinyl compound-vinyl cyanide compound copolymer (B) may be prepared by emulsion polymerization, solution polymerization, or bulk polymerization. In this case, heat resistance and fluidity may be excellent.

The emulsion polymerization, solution polymerization, and bulk polymerization may be performed by emulsion polymerization, solution polymerization, and bulk polymerization commonly practiced in the technical field to which the present invention pertains, without being limited thereto.

(C) Saturated carboxylic acid compound

In one embodiment of the present invention, the saturated carboxylic acid compound may be a compound including one or more -COOH groups at the terminal thereof and having a C5 to C30 alkyl group.

The saturated carboxylic acid compound may preferably have a refractive index (80 °C) of 1.35 to 1.45 or 1.4 to 1.45. In this case, when using an unsaturated carboxamide compound to be described later in combination, the physical property balance between injection molding release properties and transparency may be excellent.

Here, the refractive index may be measured by a measurement method known in the art. As a specific example, a film of less than 0.2T is manufactured by extrusion, and the refractive index of the sample with respect to air under room temperature conditions may be measured.

Based on 100 parts by weight of the base resin, the saturated carboxylic acid compound may be included in an amount of 0.1 to 1.0 part by weight, 0.3 to 1.0 part by weight, 0.2 to 0.9 parts by weight, or 0.3 to 0.9 parts by weight. Within this range, the physical property balance between injection molding release properties and transparency may be excellent.

The saturated carboxylic acid compound is not particularly limited as long as the saturated carboxylic acid compound follows the definition of the present invention, and may be prepared directly or a commercially available product may be used.

(D) Unsaturated carboxamide compound

In one embodiment of the present invention, the unsaturated carboxamide compound may be a compound including one or more -CON groups at the terminal thereof and having a C5 to C50 alkyl group.

The -CON group may be $-CONH_2$, $-CONHR_1$, or $-CONR_1R_2$. Here, $R_1$ and $R_2$ may independently be an alkyl group having 1 to 5 carbon atoms.

The unsaturated carboxamide compound may preferably have a refractive index (80 °C) of 1.5 to 1.6 or 1.53 to 1.58. In this case, when using the above-described saturated carboxylic acid compound in combination, the physical property balance between injection molding release properties and transparency may be excellent.

Based on 100 parts by weight of the base resin, the unsaturated carboxamide compound may be included in an amount of 0.1 to 1.0 part by weight, 0.3 to 1.0 part by weight, 0.2 to 0.9 parts by weight, or 0.3 to 0.9 parts by weight. Within this range, the physical property balance between injection molding release properties and transparency may be excellent.

The unsaturated carboxamide compound is not particularly limited as long as the unsaturated carboxamide compound follows the definition of the present invention, and may be prepared directly or a commercially available product may be used.

**ASA-based resin composition**

For example, the ASA-based resin composition may include (A1) and (A2) in a weight ratio (A1:A2) of 1:3.5 to 1:10, 1:3.5 to 1:9, or 1:4 to 1:8. In this case, even when including an injection lubricity improver, the physical property balance between injection molding release properties and transparency may be excellent.

Based on 100 parts by weight of the base resin, a total amount of the saturated carboxylic acid compound (C) and the unsaturated carboxamide compound (D) may be preferably 0.51 to 1.44 parts by weight, more preferably 0.6 to 1.4 parts by weight, still more preferably 0.6 to 1.3 parts by weight. Within this range, the physical property balance between injection molding release properties, transparency, and mold deposit may be excellent.

The mold deposit is described in detail below, so the detailed description thereof is omitted here.

For example, the ASA-based resin composition may further contain a lubricant or the lubricant and additives.

The additives may include one or more selected from the group consisting of a lubricant, a heat stabilizer, a UV stabilizer, a fluorescent brightening agent, a chain extender, a pigment, an antibacterial agent, an antifriction agent, and an anti-wear agent.

For example, based on 100 % by weight of all components (A1+A2+B+C+D additives) constituting the ASA-based resin composition, the additives may be further included in an amount of 0.01 to 5 % by weight, preferably 0.05 to 3 % by weight, more preferably 0.1 to 3 % by weight, still more preferably 0.1 to 1 % by weight. In this case, the required properties may be effectively implemented without deteriorating the inherent properties of the ASA-based resin composition of the present invention.

For example, the lubricant may include one or more selected from the group consisting of an alkyl acrylate-based polymer, a styrene-acrylonitrile copolymer having a weight average molecular weight of 30,000 to 70,000 g/mol, a copolymer containing ethylene, olefin-based wax, and an aliphatic amide-based compound, preferably one or more selected from the group consisting of an alkyl acrylate-based polymer, a styrene-acrylonitrile copolymer having a weight average molecular weight of 30,000 to 70,000 g/mol, and an olefin-based wax, more preferably an alkyl acrylate-based polymer. In this case, physical property balance, scratch resistance, colorability, and appearance quality may be excellent.

The alkyl acrylate-based polymer as a lubricant may include one or more selected from the group consisting of poly(methyl acrylate), poly(ethyl acrylate), and poly(butyl acrylate). In this case, the formation of mold deposits is suppressed, so that the appearance of a molded article may be attractive and high gloss may be achieved.

For example, based on 100 parts by weight of all components (A1+A2+B) constituting the ASA-based resin composition, the alkyl acrylate-based polymer as a lubricant may be included in an amount of 1 part by weight or less, preferably 0.1 to 1 part by weight, more preferably 0.3 to 1 part by weight. Within this range, transparency and molding release properties may be improved.

The alkyl acrylate-based polymer as a lubricant is not particularly limited as long as the alkyl acrylate-based polymer is an alkyl acrylate-based lubricant commonly used in the technical field to which the present invention belongs, and the alkyl acrylate-based polymer may be prepared directly or a commercially available product may be used.

The styrene-acrylonitrile copolymer as a lubricant may have a weight average molecular weight of preferably 40,000 to 67,000 g/mol, more preferably 50,000 to 65,000 g/mol, still more preferably 55,000 to 65,000 g/mol. Within this range, fluidity may be improved, thereby improving processability and appearance quality.

For example, the styrene-acrylonitrile copolymer as a lubricant may have a melt flow index (190 °C, 5 kg) of 20 to 60 g/10 min, preferably 25 to 55 g/10 min as measured according to ISO 1133. Within this range, impact strength, fluidity, and appearance quality may be excellent.

For example, the styrene-acrylonitrile copolymer as a lubricant may have a heat deflection temperature of 82 to 90°C, preferably 84 to 88 °C as measured according to ASTM D648. Within this range, impact strength, fluidity, and appearance quality may be excellent.

For example, based on 100 parts by weight of all components (A1+A2+B) constituting the ASA-based resin composition, the styrene-acrylonitrile copolymer as a lubricant may be included in an amount of 1 part by weight or less, preferably 0.1 to 1 part by weight, more preferably 0.3 to 1 part by weight. Within this range, transparency and molding release properties may be improved.

For example, the ethylene-containing copolymer may include one or more selected from the group consisting of an ethylene/1-butene copolymer and an ethylene/n-butyl acrylate/carbon monoxide ternary copolymer. In this case, heat resistance, fluidity, and appearance quality may be excellent.

The ethylene-containing copolymer may have a weight average molecular weight of preferably 40,000 to 67,000 g/mol, more preferably 50,000 to 65,000 g/mol, still more preferably 55,000 to 65,000 g/mol. Within this range, fluidity may be improved, thereby improving processability and appearance quality.

For example, based on 100 parts by weight of all components (A1+A2+B) constituting the ASA-based resin composition, the ethylene-containing copolymer may be included in an amount of 1 part by weight or less, preferably 0.1 to 1 part by weight, more preferably 0.3 to 1 part by weight. Within this range, transparency and molding release properties may be improved.

For example, the olefin-based wax may include one or more selected from the group consisting of polyethylene wax and polypropylene wax, preferably polyethylene wax. In this case, heat resistance, fluidity, and appearance quality may be excellent.

For example, based on 100 parts by weight of all components (A1+A2+B) constituting the ASA-based resin composition, the olefin-based wax may be included in an amount of 1 part by weight or less, preferably 0.1 to 1 part by weight, more preferably 0.3 to 1 part by weight. Within this range, transparency and molding release properties may be improved.

For example, the aliphatic amide-based compound may include one or more selected from the group consisting of stearamide, behanamide, ethylene bis(stearamide), N,N'-ethylene bis(12-hydroxy stearamide), erucamide, oleamide, and ethylene bis oleamide, preferably ethylene bis(stearamide). In this case, impact strength, fluidity, and appearance quality may be excellent.

In particular, the thermoplastic resin composition of the present invention preferably does not contain an excess of a stearate-based lubricant. In this case, as shown in Example 2, compared to Comparative Examples 7 and 8 to be described later, a molded article having an aesthetically pleasing appearance and high gloss may be obtained.

For example, the stearate-based lubricant may include one or more selected from the group consisting of barium stearate, calcium stearate, magnesium stearate, zinc stearate, and stearic acid.

For example, based on 100 parts by weight of all components (A1+A2+B) constituting the ASA-based resin composition, the aliphatic amide-based compound may be included in an amount of 1 part by weight or less, preferably 0.1 to 1 part by weight, more preferably 0.3 to 1 part by weight. Within this range, transparency and molding release properties may be improved.

For example, based on 100 % by weight of all components (A1+A2+B+C+D+lubricant) constituting the ASA-based resin composition, the lubricant may be included in an amount of 0.1 to 3 % by weight, preferably 0.5 to 2.5 % by weight, more preferably 0.7 to 2.2 % by weight. Within this range, impact resistance and fluidity may be excellent.

For example, as other additives except the lubricant, based on 100 % by weight of all components (A1+A2+B+C+D+other additives) constituting the ASA-based resin composition, one or more additives selected from the group consisting of a heat stabilizer, a UV stabilizer, a fluorescent brightening agent, a chain extender, a pigment, an antibacterial agent, an antifriction agent, and an anti-wear agent may be further included in an amount of 0.1 to 5 % by weight, preferably 1 to 3 % by weight, respectively. In this case, the required properties may be effectively implemented without deteriorating the inherent properties of the ASA-based resin composition of the present invention.

For example, based on 100 % by weight of all components (A1+A2+B+C+D+heat stabilizer) constituting the ASA-based resin composition, the heat stabilizer may be included in an amount of 0.1 to 2 % by weight, more preferably 0.2 to 1.5 % by weight. Within this range, heat resistance may be improved.

For example, the heat stabilizer may include one or more selected from the group consisting of a phenol-based heat stabilizer, a phosphite-based heat stabilizer, and a thioether-based heat stabilizer, preferably one or more selected from the group consisting of a phenol-based heat stabilizer and a phosphite-based heat stabilizer.

For example, the phenol-based heat stabilizer may include one or more selected from the group consisting of tetrakis methylene 3-(3,5-di-tert-butyl-4-hydroxyphenyl)propionate methane, 1,3,5-tris-(4-t-butyl-3-hydroxy-2,6-dimethylbenzyl)-1,3,5-triazine-2,4,6-(1H,3H,5H)-trione, and 1,3,5-tris-(3,5-di-t-butyl-4-hydroxybenzyl)-s-triazine-2,4,6-(1H,3H,5H)-trione.

For example, the phosphite-based heat stabilizer may be tris(nonylphenyl)phosphite, tris-(2,4-di-tert-butylphenyl)phosphite, bis(2,4-di-tert-butylphenyl)pentaerythritol diphosphite, or a mixture thereof.

For example, the thioether-based heat stabilizer may include one or more selected from the group consisting of dilauryl thiodipropionate, dimyristyl thiodipropionate, laurylstearyl thiodipropionate, distearyl thiodipropionate, dimethyl thiodipropionate, 2-mercaptobenzimidazole, phenothiazine, octadecyl thioglycolate, butyl thioglycolate, octyl thioglycolate, and thiocresol.

For example, based on 100 % by weight of all components (A1+A2+B+C+D+heat stabilizer) constituting the ASA-based resin composition, the UV stabilizer may be included in an amount of preferably 0.1 to 3 % by weight, more preferably 0.5 to 1.5 % by weight. In this case, weather resistance may be improved.

For example, the UV stabilizer may include a hindered amine-based UV stabilizer (HALS), preferably one or more selected from the group consisting of 1,1-bis(2,2,6,6-tetramethyl-4-piperidyl)succinate, bis(2,2,6,6-tetramethyl-4-piperidyl)sebacate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl)-N-butyl-3,5-di-tert-butyl-4-hydroxybenzilmalonate, a condensation product of 1-(2-hydroxyethyl)-2,2,6,6-tetramethyl-4-hydroxypiperidine and succinic acid, a linear or cyclic condensation product of N,N'-bis(2,2,6,6-tetramethyl-4-piperidyl)hexamethylene diamine and 4-tert-octylamino-2,6-di-chloro-1,3,5-triazine, tris(2,2,6,6-tetramethyl-4-piperidyl)nitrilotriacetate, tetrakis(2,2,6,6-tetramethyl-4-piperidyl)-1,2,3,4-butane tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, a linear or cyclic condensation product of N,N'-bis(2,2,6,6-tetramethyl-4-piperidyl)hexamethylene diamine and 4-morpholino-2,6-dichloro-1,3,5-triazine, a reaction product of 7,7,9,9-tetramethyl-2-cycloundecyl-1-oxa-3,8-diaza-4-oxospiro-[4,5]decane and epichlorohydrin, and poly[[6-(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino], more preferably bis(2,2,6,6-tetramethyl-4-piperidyl)sebacate(bis(2,2,6,6-tetramethyl-4-piperidyl) sebacate), 2-(2H-benzotriazole-2-yl)-4-(-(1,1,3,3-tetramethylbutyl)phenol(2-(2H-benzotriazol-2-yl)-4-(1,1,3,3-tetramethylbutyl) phenol), poly[[6-(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino], or a mixture thereof, still more preferably bis(2,2,6,6-tetramethyl-4-piperidyl)sebacate(bis(2,2,6,6-tetramethyl-4-piperidyl), poly[[6-(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetramethyl-4-piperidinyl)imino], or a mixture thereof. In this case, weather resistance may be significantly improved without degrading impact resistance and fluidity.

For example, the pigment may be carbon black pigment.

For example, based on 100 % by weight of all components (A1+A2+B+C+D+pigment) constituting the ASA-based resin composition, based on 100 parts by weight of the base resin, the pigment may be included in an amount of preferably 0.5 to 5 % by weight, more preferably 1 to 4.5 % by weight, still more preferably 2 to 4.5 % by weight. Within this range, physical property balance and colorability may be excellent.

For example, as the antibacterial agent, an inorganic antibacterial agent including a zinc-based antibacterial agent and a copper-based antibacterial agent, or an organic antibacterial agent known in the art may be used.

For example, based on 100 % by weight of all components (A1+A2+B+C+D+antibacterial agent) constituting the ASA-based resin composition, the antibacterial agent may be included in an amount of preferably 0.5 to 5 % by weight, more preferably 1 to 4.5 % by weight, still more preferably 2 to 4.5 % by weight. Within this range, physical property balance and antibacterial effect may be excellent.

For example, based on 100 % by weight of all components (A1+A2+B+C+D+antifriction agent) constituting the ASA-based resin composition, the antifriction agent may be included in an amount of preferably 0.5 to 5 % by weight, more preferably 1 to 4.5 % by weight, still more preferably 2 to 4.5 % by weight. Within this range, physical property balance and friction resistance may be excellent.

For example, based on 100 % by weight of all components (A1+A2+B+C+D+anti-wear agent) constituting the ASA-based resin composition, the anti-wear agent may be included in an amount of preferably 0.5 to 5 % by weight, more preferably 1 to 4.5 % by weight, still more preferably 2 to 4.5 % by weight. Within this range, physical property balance and wear resistance may be excellent.

In addition, the present invention provides an ASA-based resin composition including 100 parts by weight of a base resin including 1 to 10 % by weight of a small particle-diameter acrylic graft copolymer (A1); 35 to 50 % by weight of a large particle-diameter acrylic graft copolymer (A2); and 40 to 60 % by weight of a methacrylate-based copolymer (B),

> 0.1 to 1 part by weight of a saturated carboxylic acid compound (C) including one or more -COOH groups at the terminal thereof, having a C5 to C30 alkyl group, and having a refractive index (80 °C) of 1.35 to 1.45, and
> 0.1 to 1 part by weight of an unsaturated carboxamide compound (D) including one or more -CON groups at the terminal thereof, having a C5 to C50 alkyl group, and having a refractive index (80 °C) of 1.5 to 1.6,
> wherein the total amount of the saturated carboxylic acid compound (C) and the unsaturated carboxamide compound (D) is 0.51 to 1.44 parts by weight.

For example, when continuous injection of 200 shots is performed on a removable mold core under injection molding conditions of a temperature of 250 to 280 °C and a pressure of 25 to 35 bar using an injection molding machine (clamping force: 220 tons, LS Co.), a weight of gas deposited on the mold core is measured, and then mold deposit is calculated by Equation 1 below, the ASA-based resin composition may have a mold deposit of 40 mg or less, 36 mg or less, and 35.5 mg or less. Within this range, physical property balance may be excellent, and appearance quality may be improved by maintaining transparency.

Mold deposit (mg) = Weight of mold core after 200 shots - Weight of initial mold core       [Equation 1]

For example, the ASA-based resin composition may have a release force of 1600 N or less or 1590 N or less as measured by installing a device for measuring injection molding release properties (ejection force) in an extraction step of a cup mold injection molding machine. Within this range, release properties may be excellent, so cracks rarely occur after injection, resulting in excellent appearance quality.

The ASA-based resin composition may have a haze of less than 3.0 %, preferably 2.9 % or less as measured according to ASTM 1003dp. Within this range, physical property balance may be excellent, and appearance quality may be improved by maintaining transparency.

For example, the ASA-based resin composition may have a heat deflection temperature (HDT) of 74°C or higher, preferably 74 to 76 °C as measured using Auto HDT Tester 6A-2 (Manufacturer: TOYOSEIKI) according to ISO 75-1,2. Within this range, heat resistance properties may be excellent without affecting mechanical strength.

Method of preparing ASA-based resin composition

For example, a method of preparing an ASA-based resin composition includes a step of kneading and extruding an acrylic graft copolymer (A), a methacrylate-based copolymer (B), a saturated carboxylic acid compound (C), and an unsaturated carboxamide compound (D) at 200 to 300 °C and 100 to 500 rpm. In this case, even when including an injection lubricity improver, the physical property balance between transparency, injection molding release properties, and mold deposit may be excellent.

For example, the method includes a step of kneading and extruding 100 parts by weight of a base resin including the acrylic graft copolymer (A) and the methacrylate-based copolymer (B); and 0.51 to 1.44 parts by weight in total of the saturated carboxylic acid compound (C) and the unsaturated carboxamide compound (D) at 200 to 300 °C and 100 to 500 rpm. In this case, the physical property balance between injection molding release properties, transparency, and mold deposit may be excellent.

As a preferred example, the method includes a step of kneading and extruding, at 200 to 300 °C and 100 to 500 rpm, 100 parts by weight of a base resin including 1 to 10 % by weight of a small particle-diameter acrylic graft copolymer (A1); 35 to 50 % by weight of a large particle-diameter acrylic graft copolymer (A2); and 40 to 60 % by weight of a methacrylate-based copolymer (B), 0.1 to 1 part by weight of a saturated carboxylic acid compound (C) including one or more -COOH groups at the terminal thereof, having a C5 to C30 alkyl group, and having a refractive index (80 °C) of 1.35 to 1.45, and 0.1 to 1 part by weight of an unsaturated carboxamide compound (D) including one or more -CON groups at the terminal thereof, having a C5 to C50 alkyl group, and a refractive index (80 °C) of 1.5 to 1.6, wherein a total input amount of the saturated carboxylic acid compound and the unsaturated carboxamide compound is 0.51 to 1.44 parts by weight based on 100 parts by weight of the base resin. In this case, by including an injection lubricity improver, the physical property balance between injection molding release properties, transparency, and mold deposit may be excellent.

The method of preparing an ASA-based resin composition shares all the technical features of the above-described ASA-based resin composition. Therefore, the description of the overlapping parts will be omitted.

The step of preparing pellets using an extrusion kneader is preferably performed at 200 to 300 °C in a size of 25 to 75 pi, more preferably at 220 to 260°C in a size of 20 to 70 pi. Within this range, stable extrusion is possible and the mixing effect is excellent. At this time, the temperature is the temperature set in the cylinder, and pi means the outer diameter (unit: mm).

An extrusion kneader commonly used in the technical field to which the present invention belongs may be used in the present invention without particular limitation. Preferably, a two-axis extrusion kneader may be used.

Molded article

For example, a molded article of the present invention includes the ASA-based resin composition of the present invention. In this case, compared to conventional ASA resin compositions, even when including an injection lubricity improver, the physical property balance between injection molding release properties, transparency, and mold deposit may be excellent.

A method of manufacturing a molded article according to the present invention including a step of injecting pellets manufactured using the method of preparing an ASA-based resin composition at an injection temperature of 200 to 300 °C under an injection pressure of 60 to 100 bar and a holding pressure of 30 to 65 bar. In this case, an injection-molded article with high-impact strength may be easily manufactured.

The injection temperature may be preferably 220 to 280 °C, more preferably 230 to 270 °C. Within this range, injection-molded articles requiring complex designs may be easily manufactured.

The injection pressure may be preferably 70 to 90 bar, more preferably 75 to 85 bar. Within this range, injection-molded articles requiring complex designs may be easily manufactured.

The holding pressure may be preferably 35 to 60 bar, more preferably 40 to 55 bar. Within this range, injection-molded articles requiring complex designs may be easily manufactured.

The molded article may be used in transparent small medical products including syringes and tube connectors and transparent food containers.

In describing the ASA-based resin composition of the present invention, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

Materials used in examples and comparative examples are as follows.

* (A1) Small particle-diameter acrylic graft copolymer: An ASA graft copolymer containing acrylate rubber having an average particle diameter of 80 nm (butyl acrylate: 35 to 45 % by weight, styrene: 40 to 50 % by weight, and acrylonitrile: 5 to 10 % by weight, weight average molecular weight: 50,00 0 to 150,000 g/mol)

* (A2) Large particle-diameter acrylic graft copolymer: An ASA graft copolymer containing acrylate rubber having an average particle diameter of 220 nm (butyl acrylate: 35 to 45 % by weight, styrene: 40 to 50 % by weight, and acrylonitrile: 5 to 10 % by weight, weight average molecular weight: 50,000 to 150,000 g/mol)

* (B) Methacrylate-based copolymer: A methacrylic acid alkyl ester compound-aromatic vinyl compound-vinyl cyanide compound copolymer (methyl methacrylate: 71 % by weight, styrene: 22 % by weight, and acrylonitrile: 7 % by weight, weight average molecular weight: 120,000 to 150,000 g/mol)

* (C) Saturated carboxylic acid compound: A stearic acid-based compound ( LG H&H Co., product name: Elofad TH100) including a -COOH group at one terminal thereof, having a C18 alkyl group, and having a refractive index (80 °C) of 1.4299

* (D) Unsaturated carboxamide compound: An erucamide-based compound (AkzoNobel Co., product name:

ArmoslipE) including a -CON-containing group at one terminal thereof, one double bond at the center of the skeleton thereof, and an alkyl group having 22 carbon atoms and having a refractive index (80 °C) of 1.5614

Examples 1 to 4, and Comparative Examples 1 to 8

According to the components and contents shown in Tables 1 and 2 below, the components were fed into a twin-screw extruder. Based on 100 parts by weight in total of components (A1), (A2), and (B) described above, components (C) and (D) were fed into the twin-screw extruder in the corresponding amounts (parts by weight).

Then, kneading and extrusion were performed at a cylinder temperature of 240 °C to obtain pellets, and melt flow index was measured using the obtained pellets.

Afterward, a specimen for measuring physical properties was produced by performing injection at an injection temperature of 240 °C using an injection machine (Engel Co., 120MT).

[Test Examples]

The properties of the specimens manufactured in Examples 1 to 4 and Comparative Examples 1 to 8 were measured by the following methods, and the results are shown in Tables 1 and 2 below.

Measurement methods

[0131]    * Injection molding release properties (ejection force, unit: N): Injection molding release properties were measured at an injection temperature of 210°C and a mold temperature of 40 °C under a holding pressure of 80 MPa. Specifically, after injection with holding pressure only, a device for measuring injection molding release properties (ejection force) shown in FIG. 1 was installed on an injection molding machine for cup-shaped injection molded products, and injection molding release properties were measured by measuring extraction pressure during an extraction process.

Specifically, the release force was monitored through a sensor attached to injection molding release properties measuring equipment, and the data was processed to obtain the results.

* Haze (unit %): Haze was measured at 25 °C according to ASTM D1003dp.

* Mold deposit (unit: mg): Using an injection machine (clamping force: 220 tons, LS Co.), continuous injection of 200 shots was performed on a removable mold core under injection molding conditions of a temperature of 250 to 280 °C and a pressure of 25 to 35 bar. Then, the weight of gas deposited in the mold core was measured, and mold deposit was calculated using Equation 1 below.

Mold deposit (mg) = Weight of mold core after 200 shots - Weight of initial mold core                [Equation 1]

* Heat deflection temperature (HDT, °C): Heat deflection temperature was measured using an Auto HDT Tester 6A-2 (TOYOSEIKI Co.) according to ISO 75-1,2.

[Table 1]

| Classification | Example 1 | Example 2 | Example 3 | Example 4 |
|---|---|---|---|---|
| Graft copolymer (A1) | 10 | 5 | 8 | 10 |
| Graft copolymer (A2) | 35 | 40 | 45 | 40 |
| Methacrylate-based copolymer (B) | 55 | 55 | 47 | 50 |
| Total amount of (C)+(D) (parts by weight) | 1.3 | 1 | 1.3 | 0.6 |
| Amount of (C) (parts by weight) | 0.8 | 0.5 | 0.5 | 0.3 |
| Amount of (D) (parts by weight) | 0.5 | 0.5 | 0.8 | 0.3 |
| Injection molding release properties (N) | 1350 | 1480 | 1380 | 1580 |
| Haze (%) | 2.82 | 2.48 | 2.74 | 2.01 |
| Mold deposits (mg) | 36 | 25 | 38 | 14 |
| HDT (°C) | 75.1 | 75,5 | 76.3 | 77.1 |

[Table 2]

| Classification | Comparative Example 1 | ComparativeExample 2 | ComparativeExample 3 | ComparativeExample 4 | ComparativeExample 5 | ComparativeExample 6 | ComparativeExample 7 | ComparativeExample 8 |
|---|---|---|---|---|---|---|---|---|
| Graft copolymer (A1) | 5 | 5 | 5 | 5 | 5 | 5 | 5 | 5 |
| Graft copolymer (A2) | 40 | 40 | 40 | 40 | 40 | 40 | 40 | 40 |
| Methac rylate -based copolymer (B) | 55 | 55 | 55 | 55 | 55 | 55 | 55 | 55 |
| Total amount of (C)+(D) (parts by weight) | 0 | 1 | 1 | 0.4 | 1.6 | 2 | 1.6 | 1.6 |
| Amount of (C) (parts by weight) | 0 | 1 | 0 | 0.2 | 0.8 | 1 | 1.2 | 0.4 |
| Amount of (D) (parts by weight) | 0 | 0 | 1 | 0.2 | 0.8 | 1 | 0.4 | 1.2 |
| Injection molding release properties(N) | 2050 | 1410 | 1490 | 1710 | 1210 | 1070 | 1180 | 1290 |
| Haze (%) | 1.56 | 3.34 | 3.27 | 1.73 | 3.85 | 4.51 | 4.03 | 3.94 |
| Mold deposits (mg) | 6 | 28 | 26 | 10 | 51 | 68 | 58 | 51 |
| HDT (°C) | 75.3 | 75.6 | 75.4 | 75.1 | 75.8 | 75.9 | 75.1 | 75.3 |

In Tables 1 and 2, the total amount (parts by weight) of (C)+(D) is the sum of the input amount (parts by weight) of (C) and the input amount (parts by weight) of (D). Here, the input amount (parts by weight) of (C) and the input amount (parts by weight) of (D) are based on 100 parts by weight of the base resin (A1+A2+B).

As shown in Tables 1 and 2, Examples 1 to 4 according to the present invention exhibited injection molding release properties equal to or superior to those of Comparative Examples 1 to 8. In addition, compared to Comparative Examples 1 to 8, in the case of Examples 1 to 4, transparency was improved, and mold deposits were reduced, thereby preventing deterioration of surface properties that may occur during molding processing. In addition, even when producing small products, the appearance quality was excellent.

In particular, in the case of Example 4 using the base resin including the graft copolymers (A-1) and (A-2) and the methacrylate-based copolymer (B) and an injection lubricity improver in a small amount within an appropriate range, compared to Example 1 using the base resin including the graft copolymer (A-1) and (A-2) and the methacrylate-based copolymer (B) and the injection lubricity improver (C) in an excess amount within an appropriate range, injection molding release properties and transparency were improved, and mold deposits were reduced.

In addition, Comparative Example 1 without using the compounds (C) and (D) exhibited poor injection molding properties.

In addition, Comparative Example 2 or Comparative Example 3 using the compound (C) or the compound (D) alone exhibited poor transparency. For reference, when the measurement haze is less than 3.0, it is judged as Pass.

In addition, Comparative Example 4 using the compounds (C) and (D) in an amount less than the range of the present invention exhibited poor injection molding release properties. For reference, when the measurement pressure exceeds 1600 N, cracks occur on an injection-molded article during injection.

In addition, Comparative Examples 5 and 6 using the compounds (C) and (D) in an amount greater than the range of the present invention exhibited poor transparency and mold deposit. For reference, when the measurement weight is less than 50 mg, it is judged as Pass.

In addition, Comparative Example 7 using an excess of the compound (C) and Comparative Example 8 using an excess of the compound (D) exhibited poor release force, transparency, and mold deposit.

In conclusion, even when using an injection lubricity improver, by controlling the contents of a graft copolymer and styrene-based copolymer containing acrylate rubber having different average particle diameters, the synergy effect of combination thereof improves injection molding release properties and transparency and reduces mold deposits. Accordingly, transparency equivalent to or superior to that of conventional transparent materials may be realized. In addition, since release properties is improved during injection, injection cracking may be prevented even when injecting small transparent materials. Accordingly, the present invention may provide a resin composition having excellent product reliability.

## Claims

1. An ASA-based resin composition, comprising a base resin comprising an acrylic graft copolymer (A) and a methacrylate-based copolymer (B), a saturated carboxylic acid compound (C), and an unsaturated carboxamide compound (D),
   wherein, based on 100 parts by weight of the base resin, the saturated carboxylic acid compound (C) and the unsaturated carboxamide compound (D) are comprised in a total amount of 0.51 to 1.44 parts by weight.

2. The ASA-based resin composition according to claim 1, wherein the saturated carboxylic acid compound is a compound comprising one or more -COOH groups at a terminal thereof, having a C5 to C30 alkyl group, and having a refractive index (80 °C) of 1.35 to 1.45.

3. The ASA-based resin composition according to claim 1, wherein the unsaturated carboxamide compound is a compound comprising one or more -CON groups at a terminal thereof, having a C5 to C50 alkyl group, and having a refractive index (80 °C) of 1.5 to 1.6.

4. The ASA-based resin composition according to claim 1, wherein the saturated carboxylic acid compound (C) and the unsaturated carboxamide compound (D) are comprised in a weight ratio of 1:0.5 to 1:1.5 (C:D).

5. The ASA-based resin composition according to claim 1, wherein the base resin comprises the acrylic graft copolymer (A) and the methacrylate-based copolymer (B) in a weight ratio of 1:0.5 to 1:1.5 (A:B).

6. The ASA-based resin composition according to claim 5, wherein the acrylic graft copolymer (A) comprises a small particle-diameter acrylic graft copolymer (A1) and a large particle-diameter acrylic graft copolymer (A2) in a weight ratio of 1:3.5 to 1:10 (A1:A2).

7. The ASA-based resin composition according to claim 6, wherein the small particle-diameter acrylic graft copolymer (A1) comprises 35 to 45 % by weight of a rubber polymer having an average particle diameter of 50 to 100 nm, 40 to 50 % by weight of an aromatic vinyl compound, and 5 to 10 % by weight of a vinyl cyanide compound, and has a weight average molecular weight of 50,000 to 150,000 g/mol.

8. The ASA-based resin composition according to claim 6, wherein the large particle-diameter acrylic graft copolymer (A2) comprises 35 to 45 % by weight of a rubber polymer having an average particle diameter of 150 to 300 nm, 40 to 50 % by weight of an aromatic vinyl compound, and 5 to 10 % by weight of a vinyl cyanide compound, and has a weight average molecular weight of 50,000 to 150,000 g/mol.

9. The ASA-based resin composition according to claim 1, wherein, based on 100 parts by weight of the base resin, the saturated carboxylic acid compound is comprised in an amount of 0.1 to 1.0 part by weight.

10. The ASA-based resin composition according to claim 1, wherein, based on 100 parts by weight of the base resin, the unsaturated carboxamide compound is comprised in an amount of 0.1 to 1.0 part by weight.

11. The thermoplastic resin composition according to claim 1, wherein, when continuous injection of 200 shots is performed on a removable mold core under injection molding conditions of a temperature of 250 to 280 $^D$C and a pressure of 25 to 35 bar using an injection molding machine (clamping force: 220 tons, LS Co.), a weight of gas deposited on the mold core is measured, and then mold deposit is calculated by Equation 1 below, the ASA-based resin composition has a mold deposit of 6.2 mg or less.

Mold deposit (mg) = Weight of mold core after 200 shots - Weight of initial mold core        [Equation 1]

12. The thermoplastic resin composition according to claim 1, wherein the ASA-based resin composition has a release force of 1600 N or less as measured by installing an ejection force measurement device in an extraction step of a cup mold injection molding machine.

13. The ASA-based resin composition according to claim 1, wherein the ASA-based resin composition has a haze of less than 3.0 % as measured according to ASTM D1003.

14. A method of preparing an ASA-based resin composition, comprising kneading and extruding a base resin comprising an acrylic graft copolymer (A) and a methacrylate-based copolymer (B), a saturated carboxylic acid compound (C), and an unsaturated carboxamide compound (D) at 200 to 300 °C and 100 to 500 rpm,
wherein, based on 100 parts by weight of the base resin, the saturated carboxylic acid compound (C) and the unsaturated carboxamide compound (D) are comprised in a total amount of 0.51 to 1.44 parts by weight.

15. A molded article, comprising the ASA-based resin composition according to any one of claims 1 to 13.

[FIG. 1]

EXTRACTION STEP
EJECTION FORCE MEASUREMENT

## INTERNATIONAL SEARCH REPORT

| | International application No. |
| --- | --- |
| | **PCT/KR2024/012166** |

| A. | CLASSIFICATION OF SUBJECT MATTER |
| --- | --- |

**C08L 33/20**(2006.01)i; **C08L 51/04**(2006.01)i; **C08L 51/00**(2006.01)i; **C08K 5/09**(2006.01)i; **C08K 5/20**(2006.01)i; **B29C 45/00**(2006.01)i

According to International Patent Classification (IPC) or to both national classification and IPC

| B. | FIELDS SEARCHED |
| --- | --- |

Minimum documentation searched (classification system followed by classification symbols)

C08L 33/20(2006.01); B29C 48/16(2019.01); C08F 265/04(2006.01); C08F 279/04(2006.01); C08L 23/08(2006.01); C08L 25/12(2006.01); C08L 51/00(2006.01); C08L 51/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 아크릴레이트-스티렌-아크릴로니트릴(ASA: Acrylonitrile-styrene-acrylate), 포화 카르복실산(saturated carboxylic acid), 스테아린산(stearic acid), 불포화 카르복시아미드(unsaturated carboxylic amide), 에루카미드(erucamide), 열가소성 수지(thermoplastic), 투명(transparent)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2022-0009722 A (LG CHEM, LTD.) 25 January 2022 (2022-01-25)<br>See paragraphs [0086], [0093], [0096] and [0097], and claims 1, 12 and 13. | 1-5,9-15 |
| Y | | 6-8 |
| Y | KR 10-2012-0009860 A (LG CHEM, LTD.) 02 February 2012 (2012-02-02)<br>See claims 1, 7 and 8. | 6-8 |
| A | KR 10-2014-0096748 A (CHEIL INDUSTRIES INC.) 06 August 2014 (2014-08-06)<br>See claims 1-15. | 1-15 |
| A | JP 2017-110087 A (NOF CORP.) 22 June 2017 (2017-06-22)<br>See claims 1 and 2. | 1-15 |

| ✓ Further documents are listed in the continuation of Box C. | ✓ See patent family annex. |
| --- | --- |

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **21 November 2024** | **21 November 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/012166**

| C. | DOCUMENTS CONSIDERED TO BE RELEVANT | |
|---|---|---|
| Category* | Citation of document, with indication, where appropriate, of the relevant passages | Relevant to claim No. |
| A | CN 102161808 A (SHANGHAI KUMHO SUNNY PLASTICS CO., LTD.) 24 August 2011 (2011-08-24)<br>See claims 1 and 7. | 1-15 |

Form PCT/ISA/210 (second sheet) (July 2022)

**INTERNATIONAL SEARCH REPORT**
Information on patent family members

International application No.

**PCT/KR2024/012166**

| Patent document cited in search report | | | Publication date (day/month/year) | Patent family member(s) | | | Publication date (day/month/year) |
|---|---|---|---|---|---|---|---|
| KR | 10-2022-0009722 | A | 25 January 2022 | None | | | |
| KR | 10-2012-0009860 | A | 02 February 2012 | KR | 10-1367492 | B1 | 25 February 2014 |
| KR | 10-2014-0096748 | A | 06 August 2014 | KR | 10-1478027 | B1 | 31 December 2014 |
| JP | 2017-110087 | A | 22 June 2017 | None | | | |
| CN | 102161808 | A | 24 August 2011 | CN | 102161808 | B | 03 April 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230122497
- KR 1020240108280
- KR 20110082121 A